(19)

**Europäisches Patentamt**
**European Patent Office**
**Office européen des brevets**

(11) **EP 2 548 259 B1**

(12) **EUROPEAN PATENT SPECIFICATION**

(45) Date of publication and mention
of the grant of the patent:
**15.04.2015 Bulletin 2015/16**

(51) Int Cl.:
***H01M 10/44*** *(2006.01)*    ***H01M 10/48*** *(2006.01)*
***B60L 11/18*** *(2006.01)*    ***H02J 7/00*** *(2006.01)*
***H02M 3/158*** *(2006.01)*

(21) Application number: **11713061.7**

(22) Date of filing: **28.02.2011**

(86) International application number:
**PCT/IB2011/050848**

(87) International publication number:
**WO 2011/114247 (22.09.2011 Gazette 2011/38)**

(54) **BALANCING THE STATES OF CHARGE OF CHARGE ACCUMULATORS**

AUSGLEICH DES LADUNGSZUSTANDS VON AKKUMULATOREN

ÉGALISATION DE L'ÉTAT DE CHARGE D'ACCUMULATEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2010 US 313866 P**
**15.03.2010 CH 361102010**

(43) Date of publication of application:
**23.01.2013 Bulletin 2013/04**

(73) Proprietor: **Brusa Elektronik AG**
**9466 Sennwald (CH)**

(72) Inventor: **KRAUSE, Axel**
**CH-9650 Nesslau (CH)**

(74) Representative: **Patentbüro Paul Rosenich AG
BGZ**
**9497 Triesenberg (LI)**

(56) References cited:
**AT-A4- 505 169        US-A- 5 479 083
US-A- 5 631 534        US-A- 6 150 795
US-A1- 2002 171 397    US-A1- 2009 278 489
US-B1- 6 353 304       US-B1- 6 774 606
US-B2- 7 049 791**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 548 259 B1

**Description**

The invention relates to an electrical circuit for a parallel array of at least two charge accumulators, particularly batteries, storage batteries, etc., for the voltage supply of a load and/or for the electrical charging of the charge accumulators, with connection terminals at the charge accumulator end and connection terminals at the load or charging ends and with at least one DC converter. The invention also relates to a voltage supply device for a load, which incorporates this type of circuit. The invention further relates to a charging device that incorporates this sort of circuit.

Technical advances mean that in the coming years it will be possible to develop electric vehicles offering attractive driving performance and to produce them in greater numbers. For the foreseeable future, the most expensive individual component of a vehicle of this type will be the battery. A vehicle manufacturer can optimise costs in this respect by using the same battery for all vehicle categories supplied. Small vehicles will only be fitted with one battery; larger vehicles with two or more. This will enable greater unit numbers to be achieved and the cost of testing and certifying the battery will only be incurred once for all vehicles.

A rated voltage of 300-400 V has proved optimal in cars and light-duty commercial vehicles. It stands to reason, therefore, that the battery should be designed with this rated voltage and in larger vehicles several such batteries should be connected in parallel. In this way, the voltage remains the same and only the capacity is multiplied according to the number of batteries. Tests have revealed that there is not always an even distribution of load for two or more batteries connected in parallel. Particularly where batteries have different thermal conditions, their capacities and currents may diverge. The current voltages or states of charge of the individual batteries alter irregularly as a result. The different loads applied to the batteries may lead to premature ageing and thereby compromise the vehicle's reliability. Similar problems occur when charging the batteries. This may lead to individual batteries being charged unevenly or even being overcharged, which causes the life of the battery to be significantly reduced.

There are state-of-the-art circuits for various battery arrays, which are designed to increase the life of batteries or prevent them from being destroyed. The known solutions will be examined more closely below; most of them relate to a circuit for balancing the different voltages or states of charge of the batteries concerned.

US 20020171397 A discloses a system for improving the performance of a hybrid power supply apparatus comprising a power generating device, such as a fuel cell, and a primary energy storage device, such as a battery. The purpose of the system is to provide an equalization charge to the battery from a source other than the fuel cell when the battery achieves a predetermined state of charge condition, thereby avoiding the need to operate the fuel cell in a low power output mode. The system also includes a DC/DC converter for regulating current flow between the fuel cell and the storage devices.

In an embodiment shown in Fig. 9 of US 20020171397 A both energy storage devices are batteries which deliver equalization current to each other in alternating operating sessions. Both batteries are connected parallel with respect to a DC power bus. External switches (which are not part of the DC/DC converter) allow different operational modes, among them a charge equalization mode. For example, the state of charge condition may be achieved when the state(s) of charge of the batteries exceed threshold amounts. The two batteries are then isolated from each other so that one of the batteries can be used to provide an equalization charge to the other battery through the DC/DC converter. The circuit design is such, that - in all possible modes - the DC/DC converter converts the whole voltage of a battery. I.e. the DC-DC converter always processes the entire battery voltage and must be of correspondingly large dimensions.

JP 10225107 A discloses a DC-DC converter which makes it possible to shorten the charging time when charging batteries in parallel. An output element executes switching operations based on the output signal of a PWM comparator. The PWM comparator is controlled in such a way as to maintain the DC output voltage at a certain voltage and to maintain the DC output current below a certain value.

US 6353304 B1 discloses a system for charging and discharging batteries connected in parallel. The charging involves using an AC generator and an AC-DC converter. In a first phase, both batteries A, B are connected straight to the AC-DC converter and uniformly charged. Even before the two batteries are fully charged, the system switches to phase two.

This involves one of the batteries B being connected to the load, while the other battery A is simultaneously connected to the battery B via the DC-DC converter. Battery A is now fully charged by battery B via a step-up device. Battery B is discharged as a result. It is only when battery A is fully charged that it is connected to the load alongside battery B (phase 3). The same occurs in the following charging cycle, except that rather than battery A, battery B is now fully charged. This system should, in particular, increase the life of the batteries.

However, this reference does not envisage any measures for preventing or balancing a differing degree of load applied to the batteries in phase 3, which means that there is no optimum working load. The DC-DC converter also always processes the entire battery voltage in phase 2 and must be of correspondingly large dimensions.

AT 505169 B1 discloses a redox flow battery with two parallel-connected functional units. Each functional unit may be disconnected by a switch. In addition, a device, e.g. a DC-DC converter, is provided, in order to connect a disconnected functional unit, e.g. a battery, to the still active sub-system (another battery). With the DC-DC converter, the residual energy of the disconnected battery may be used to charge the other, still active battery. In this way, the self-discharge of the disconnected battery along with the negative side-effects can be prevented.

This reference contains no teaching in relation to the problem of balanced utilisation with simultaneous connection to the load.

US 6774606 B1 relates to the voltage supply, particularly in the case of satellites, and shows an array of batteries connected in parallel, which each form individual strings. The strings are each connected to a charge balancing unit. This reference actually relates to the parallel connection of individual batteries of different strings. No details are disclosed on the inner life of the charge balancing unit.

The following references are further removed from the invention, as they relate to series-connected batteries.

US 5479083 A discloses a charging device for multiple batteries. In a basic circuit, an inductor branches off between two series-connected batteries. Two switches alternately operated by an oscillator (e.g. at a frequency of 200 kHz and with a 50% frequency ratio) ensure that the batteries are evenly charged. In this case, the inductor should prevent power losses as a non-dissipative shunt. The flow through the inductor undergoes a complete reversal when the switches are changed, at least when the batteries are almost identically charged, which means on the one hand that throttles of the appropriate size are required and, on the other, relatively high losses occur.

US 5631534 A discloses a battery balancer in the form of a current pump module, which displays great similarities to the previous reference. In order to transfer charge from the first to the second battery, a first switch is operated by means of a PWM signal, while the second switch is left open. When the first switch is closed, the current in the inductor increases, when the first switch is open, it supplies the second battery via the second diode. The whole process also operates in the same way in reverse.

US 7049791 B2 discloses a battery balancer circuit for the uniform charging of multiple series-connected batteries. The switches, e.g. MOSFETs, are operated alternately, so that the state of charge of both batteries can be balanced via the charge bypasses with the inductors and capacitors and overcharging can be prevented.

US 2009/0278489 discloses a system and a method that dynamically equalises battery voltages. As with the previous references, the batteries are series-connected in this case and the remaining features also strongly resemble the preceding references.

US 6150795 A also relates to the problem of battery charge equalisation and pursues in circuitry terms a similar or related basic principle as the previous reference. The batteries are once again series-connected.

In the case of the voltage supply of a load with a parallel battery pack, there are also circuits that counter the problems of uneven utilisation described above by having the energy flow to and from each battery passing through its own bidirectional DC-DC converter. In other words, each individual battery is separated from the high-voltage BUS by a DC-DC-converter. In this case, all DC-DC converters are parallel-connected to the high voltage BUS at the output end. The voltage to the load may be freely selected in this case within the framework of the DC-DC operating range, irrespective of the battery voltages. However, the disadvantages are that the converters must be correspondingly powerful and therefore occupy a lot of space, because they each convert the entire battery voltage, that high power losses occur at the converters as a result of this and that the provision of its own DC-DC converter for each individual battery requires a high level of expenditure. All these requirements have a negative impact on the weight, space requirement and cost of this sort of circuit.

One of the goals of the invention is to create a circuit to balance out the state of charge of at least two batteries for a voltage supply device or a charging device, which is unencumbered by these disadvantages and in which the losses due to voltage conversion, in particular, are minimised and which is characterised by a simple design. Moreover, the weight, spatial requirement and cost of this sort of circuit should be significantly lower than the state of the art.

The invention achieves these goals and others with a circuit of the type mentioned above, in that the DC converter connects one of the connection terminals at the load or charge end to the corresponding matching connection terminals at the charge accumulator end, which are each assigned to matching terminals of the charge accumulator or combined charge accumulators, wherein corresponding terminals at the charge accumulator end can be connected by switches as active elements of the DC converter alternately or overlapping in time via at least one common passive element of the DC converter with the corresponding matching connection at the load or charging end.

This means that basically the highest differential voltage applied between matching connection terminals at the charge accumulator end or a voltage derived from this differential voltage is converted at most in the DC converter.

Where there are only two matching connection terminals at the charge accumulator end, the differential voltage applied between matching connection terminals at the charge accumulator end or a voltage derived from this differential voltage is essentially converted in the DC converter.

The invention relates to a method of balancing the states of charge of at least two parallel-connected charge accumulators, particularly batteries, storage batteries, etc, during the voltage supply of a load by the charge accumulator or during the charging of the charge accumulator, wherein at least one DC converter is used, characterised in that with switches as active elements of the DC converter the matching terminals of the charge accumulators are applied alternately with the combined matching connection terminal of the charge accumulator chain formed from the at least two charge accumulators.

The new approach is based on the consideration that the voltage difference of the two batteries is usually very small and amounts to only a few percent of a battery's total voltage. This means that it is advantageous to use a converter in such a way that only this differential voltage occurs as the converter's "operating voltage". This means that the power processed in the converter is significantly smaller than in the circuits described above, even if the converter has to process the full battery current.

The balancing of the state of charge of the batteries therefore takes place during the voltage supply of a load or during the charging of the charge accumulator. The circuit according to the invention switches alternately from one battery to the other, so that in a first switch state the battery voltage of the first battery at the converter becomes effective and in a second switch state the battery voltage of the second battery at the converter becomes effective. The DC proportions remain unaffected by the converter's mode of operation and are allowed through unchanged and applied to the output (hereafter referred to as "load-side connection terminals" in the case of a voltage supply and "charge-side connection terminals" in the case of a charging device). Only voltage changes caused by the alternately operated switches, which only occur on the scale of the voltage difference between the batteries, are changed in the converter.

A DC converter comprises active elements - switches, also referred to as choppers - which generate a time-periodic voltage curve from a DC voltage (they "chop" the voltage in a particular period) and passive elements, which again generate a DC voltage from the voltage curve changing in time. This is a sort of low-pass filter or smoothing circuit. In other words, only that part of the voltage that changes in time is converted, whereas the DC voltage part that is constant in time passes the converter unimpeded. The latter portion only causes ohmic losses, while the ripple voltage results in power losses, particularly due to the constant current change in the throttle. In the present case, the DC-DC converter does not therefore convert the total voltage of the individual batteries, but only their differential voltage. This means that it can be executed as a significantly smaller, more cost-effective design. Since it is essentially only the differential voltage or a voltage diverted from this that is converted, the power losses in the converter also remain small.

The notion of "voltage derived from the differential voltage" relates to variants that are doubtless conceivable but are less preferred, in which voltage dividers and/or other converter stages are interposed, because this would lead to additional losses in these elements. Where there are three or more batteries, the differential voltage of each battery compared with the load voltage is crucial; this means that there are several differential voltages, e.g. in the case of n batteries connected to the negative terminal, $n*(n-1)/2$ differential voltages can be measured between the positive terminals.

In the following, the circuit is described in relation to a voltage supply for a load. The aim here is for the batteries that contribute to the voltage supply to be loaded depending on their respective states of charge. The battery with the higher voltage receives a correspondingly greater load than the battery with the lower voltage. It is of course conceivable, however, that the same principle will also apply to a charging device that charges two or more charge accumulators. Conversely, the aim here is for the batteries to be charged evenly and for the charge current - likewise depending on the state of charge of the individual batteries - to be divided proportionately between the individual charge accumulators. In principle, the same circuit may, for example, be integrated in an electric vehicle, used both as a voltage supply and also for charging.

The term "connection terminal" not only refers to a physical connection within the meaning of a reciprocal plug connection or the like, but also covers, apart from the meaning as defined by connection, the meanings of input, output, terminal, line, connection, etc.

In the following some preferred embodiments of the invention are described.

A balancing circuit for parallel-connected charge accumulators, comprising:

a first charge accumulator;
a second charge accumulator;
a first DC converter, said DC converter having a first charge-accumulator end terminal, said first charge-accumulator end terminal being electrically connected to a first terminal of said first charge accumulator;
said first DC converter having a second charge-accumulator end terminal, said second charge-accumulator end terminal being electrically connected to a first terminal of said second charge accumulator, said first terminal of said second charge accumulator having the same polarity as said first terminal of said first charge accumulator;
said DC converter having a respective loading-or-charging interface connection terminal;
said DC converter having a respective common passive element; and,
said first DC converter including a first group of switches configured to controllably connect said first and second charge-accumulator end terminals to said interface connection terminal via said common passive element.

A balancing circuit for parallel-connected charge accumulators further comprising:

a first capacitor electrically connected between said first charge-accumulator end terminal and said loading-or-charging interface connection terminal, in parallel to said common passive element.

A balancing circuit for parallel-connected charge accumulators, further comprising:

a second capacitor electrically connected between said second charge-accumulator end terminal and said loading-or-charging interface connection terminal, in parallel to said common passive element.

A balancing circuit for parallel-connected charge accumulators, further comprising a third capacitor electrically connected between said first charge-accumulator end terminal and said second charge-accumulator end terminal.

A balancing circuit for parallel-connected charge accumulators, further comprising:

a third charge accumulator;
a second DC converter having a respective first charge-accumulator end terminal, said second DC converter's first charge-accumulator end terminal being electrically connected to said first terminal of said second charge accumulator;
said second DC converter having a respective second charge-accumulator end terminal, said second DC converter's second charge-accumulator end terminal being electrically connected to a first terminal of said third charge accumulator, said first terminal of said third charge accumulator having the same polarity as said first terminal of said second charge accumulator;
a third DC converter having a respective first charge-accumulator end terminal, said third DC converter's first charge-accumulator end terminal being electrically connected to said first terminal of said third charge accumulator; and,
said third DC converter having a respective second charge-accumulator end terminal, said third DC converter's second charge-accumulator end terminal being electrically connected to said first terminal of said first charge accumulator, said first terminal of said third charge accumulator having the same polarity as said first terminal of said first charge accumulator.

A balancing circuit for parallel-connected charge accumulators, further comprising:

said second DC converter having a respective loading-or-charging interface connection terminal;
said third DC converter having a respective loading-or-charging interface connection terminal; and,
all of said loading-or-charging interface connection terminals are electrically connected.

A balancing circuit for parallel-connected charge accumulators, further comprising:

said second DC converter having a respective common passive element;
said third DC converter having a respective common passive element;
said second DC converter including a second group of switches configured to controllably connect its respective first and second charge-accumulator end terminals to its respective interface connection terminal via its respective common passive element; and,
said third DC converter including a third group of switches configured to controllably connect its respective first and second charge-accumulator end terminals to its respective interface connection terminal via its respective common passive element.

A balancing circuit for parallel-connected charge accumulators, further comprising:

a third charge accumulator;
a fourth charge accumulator;
a second DC converter, said second DC converter having a respective first charge-accumulator end terminal, said second DC converter's first charge-accumulator end terminal being electrically connected to a first terminal of said third charge accumulator;
said second DC converter having a respective second charge-accumulator end terminal, said second DC converter's second charge-accumulator end terminal being electrically connected to a first terminal of said fourth charge accumulator, said first terminal of said fourth charge accumulator having the same polarity as said first terminal of said third charge accumulator;
said second DC converter having a respective loading-or-charging interface connection terminal;
said second DC converter having a respective common passive element; and,
said second DC converter including a second group of switches configured to controllably connect its respective first and second charge-accumulator end terminals to its respective interface connection terminal via its respective common passive element.

A balancing circuit for parallel-connected charge accumulators, further comprising:

a third DC converter, said third DC converter having a respective first charge-accumulator end terminal, said third DC converter's first charge-accumulator end terminal being electrically connected to said first DC converter's respective loading-or-charging interface connection terminal;

said third DC converter having a respective second charge-accumulator end terminal, said third DC converter's second charge-accumulator end terminal being electrically connected to said second DC converter's respective loading-or-charging interface connection terminal;

said third DC converter having a respective loading-or-charging interface connection terminal;

said third DC converter having a respective common passive element; and,

said third DC converter including a third group of switches configured to controllably connect its respective first and second charge-accumulator end terminals to its respective interface connection terminal via its respective common passive element.

The balancing circuit for parallel-connected charge accumulators, wherein said common passive elements are throttles.

A balancing circuit for parallel-connected charge accumulators, further comprising:

a third charge accumulator;

said DC converter having a third charge-accumulator end terminal, said third charge-accumulator end terminal being electrically connected to a first terminal of said third charge accumulator, said first terminal of said third charge accumulator having the same polarity as said first terminal of said first charge accumulator and said first terminal of said second charge accumulator; and,

said first group of switches controllably connect said third charge-accumulator end terminal to said interface connection terminal via said common passive element.

The balancing circuit for parallel-connected charge accumulators, wherein said common passive element is a throttle.

A balancing circuit for parallel-connected charge accumulators, further comprising;

a first capacitor electrically connected between said first charge-accumulator end terminal and said loading-or-charging interface connection terminal, in parallel to said common passive element;

a second capacitor electrically connected between said second charge-accumulator end terminal and said loading-or-charging interface connection terminal, in parallel to said common passive element; and,

a third capacitor electrically connected between said third charge-accumulator end terminal and said loading-or-charging interface connection terminal, in parallel to said common passive element.

The balancing circuit for parallel-connected charge accumulators, wherein said common passive element is a transformer-connected double throttle.

A method for balancing the states of charge of parallel-connected batteries, comprising:

electrically connecting a DC converter to corresponding-polarity terminals of a plurality of batteries; and,

selectively controlling switches in the DC converter to control the conversion of the highest differential voltage between the corresponding-polarity terminals of the plurality of batteries.

A method for balancing the states of charge of parallel-connected batteries, further comprising selectively connecting the switches in series with a throttle.

The invention is explained in greater detail below by means of the drawing. In this

Fig. 1    shows a circuit with symmetrical topology for a voltage supply according to the state of the art,

Fig. 2    shows a circuit with asymmetrical topology for a voltage supply according to the state of the art,

Fig. 3    shows a circuit according to the invention,

Fig. 4          shows switch states, voltages and currents in a circuit according to Fig. 3 as a function of time,

Fig. 5          shows a version of a circuit according to the invention with a transformer-connected double throttle,

Fig. 6          shows switch states and currents in a circuit according to Fig. 5 as a function of time,

Fig. 7          shows a circuit according to the invention with three batteries,

Fig. 8          shows a circuit according to the invention with four batteries,

Fig. 9          shows a variant of a circuit according to the invention with three batteries,

Fig. 10         shows switch states and currents of a circuit according to the invention in accordance with Fig. 9 as a function of time.

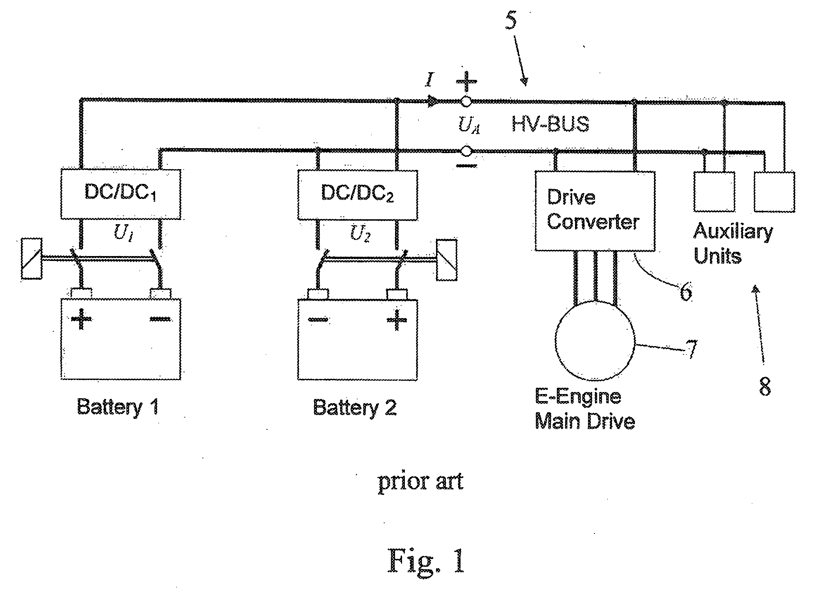

Fig. 1 shows the circuit known from the state of the art and already mentioned above, in which the energy flow to and from each battery 1, 2 goes via its own bidirectional DC-DC converter. For this reason, this circuit is also referred to as symmetrical topology. All DC-DC converters are parallel-connected at the output end to the high-voltage BUS 5. The voltage to the load 7 may be freely selected within the framework of the DC-DC operating range, irrespective of the battery voltages. The contributions made by each individual battery to the total current I may be set independently of one another in this case. The DC-DC converter may take the form of a step-up converter, a step-down converter or a step-up/step-down converter. As already mentioned above, this sort of circuit is associated with high expenditure and high costs, since each battery requires its own DC-DC converter.

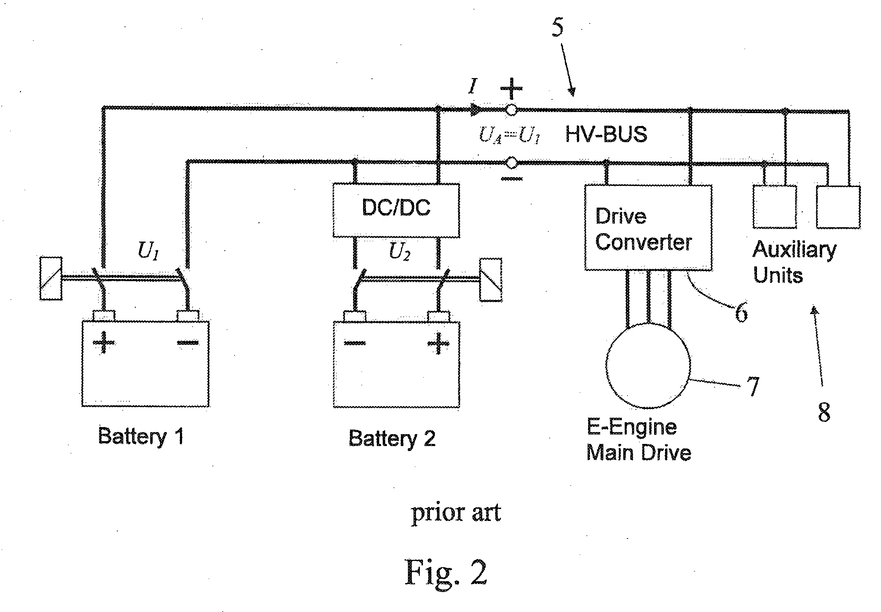

On the basis of Fig. 1, Fig. 2 shows an asymmetrical topology in which the first battery is connected directly to the HV-BUS 5. The energy flow to and from each additional battery goes via its own bidirectional DC-DC converter. All DC-DC converters are parallel-connected to the high-voltage BUS 5 at the output end. What is advantageous compared with the previously described variant from Fig. 1 is the fact that a DC-DC converter is less necessary. However, the BUS voltage is no longer freely selectable and the DC-DC converters must take the shape of costly step-up/step-down converters.

The principle disadvantage of the circuits shown in Fig. 1 and Fig. 2 is that the total power of the battery connected in each case must be processed in each DC-DC converter. In a vehicle with a drive power of 100 kW, the converted power is at least 50 kW. This sort of converter requires a considerable installation space (at least 5 litres) and represents a heavy additional component (at least 10 kg) in weight terms. In addition, there are unavoidable losses of at least 2 % of processed power, i.e. the vehicle's range drops correspondingly.

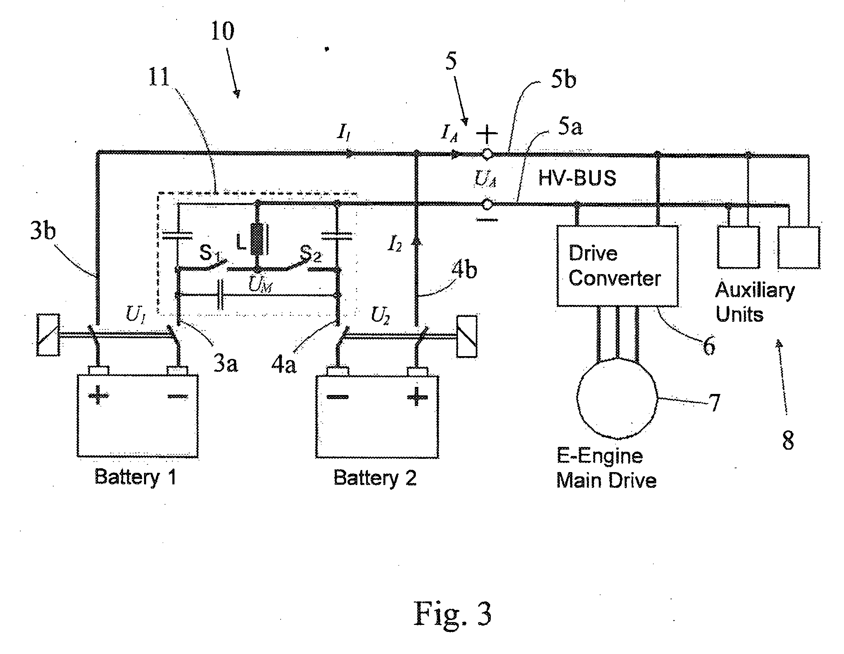

Fig. 3 shows a circuit 10 according to the invention for balancing the states of charge of the accumulators 1, 2 in case of the supply of a load 7. Two parallel-connected charge accumulators 1, 2, e.g. batteries, storage batteries, etc. are applied to a high-voltage bus 5 from two terminals 5a, 5b via the circuit 10. In the present exemplary embodiment, a drive converter 6 ensures preparation of the voltage for an engine. Moreover, auxiliary units 8 can be connected.

The heart of the circuit 10 is a DC converter 11, also referred to as a DC-DC converter or chopper. It has two connection terminals 3a, 4a at the charge accumulator end, which are respectively connected to matching polarity terminals (in the present case, negative terminals) on the charge accumulators 1, 2, and also one connection terminal 5a at the high-voltage bus 5 end, hereinafter referred to as the load end.

The opposing terminals, in relation to polarity, on the charge accumulators 1, 2 (the positive terminals in the present case) are connected to the connection terminals 3b and 4b in the circuit 10. The connection terminals 3b and 4b are connected straight to the other terminal 5b for the HV bus 5.

So whereas the connections 3b, 4b with the same polarity are connected straight to the HV-bus 5, connections 3a, 4a with opposing polarity are connected to the HV-bus 5 through the insertion of a DC converter 11.

Each DC converter is essentially made up of active elements, which modulate an input voltage, and passive elements, which generate a DC voltage as the output voltage from the modulated voltage. The aim here is for the output voltage to have a different value to the input voltage. As can be seen from Fig. 3, the DC converter 11 is made up of two switches S1, S2 as the active elements and also a throttle L as the passive element. Moreover, parallel-connected capacitors are also provided as passive elements.

The switches S1, S2 are operated across a controller (not shown in Fig. 3) and connect alternately the two matching terminals of the charge accumulators 1, 2 with the corresponding matching connection terminal 5a of the high-voltage BUS 5. In other words, the switches S1, S2 operated alternately each switch between the matching terminals of the two charge accumulators 1, 2 and the connection terminal 5a at the load end. If one switch is connected through, the other is open and vice versa. The switching states are therefore connected up directly (i.e. without gaps), so that one of the charge accumulators is always connected to the passive element L of the DC converter 11. As can be seen from the exemplary embodiment in Fig. 3, the matching battery terminals (in this case negative terminals) are connected exclusively to the HV BUS 5 via the DC converter 11. There are therefore no bypasses to shunt over the DC converter 11.

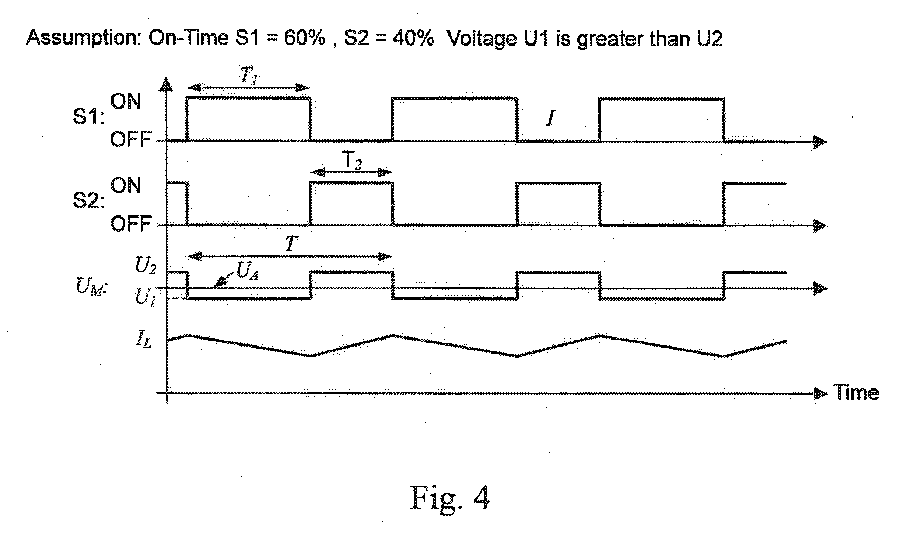

Fig. 4 illustrates the switching states of the switches S1, S2 over the course of time and also the corresponding voltages and currents occurring. In this case, $U_1$ denotes the voltage of the first battery 1 and $U_2$ the voltage of the second battery. It is assumed in this case that $U_1$ is greater than $U_2$. $U_M$ is the differential voltage $U_1$-$U_2$, which is actually processed in the DC converter 11. $U_A$ is the smoothed output voltage to the load-end terminals 5a, 5b in the circuit 10. $T_1$ and $T_2$ each denote the on-times of the switches S1 and S2. $I_L$ is the load current generated at the output.

It is expressly pointed out that the switches S1 and S2 are an integral or functional element of the DC-DC converter and, as its active elements, bring about modulation of the voltage, which is processed in the following passive elements of the converter and then applied to the outgoing terminal 5a. The bipolar switches can be operated by a controller and designed to switch at frequencies of 20 to 500 kHz, preferably roughly 50 kHz to 150 kHz. The switches S1 and S2 are preferably executed using low-voltage MOSFETS, which give rise to very low losses, even when there is a high current ($R_{DS(on)} \approx 1$ mΩ). In terms of the principle, however, any type of switch can be used - MOSFETs, transistors (e.g. IGBTs), thyristors, etc.

As can be seen from Fig. 4 by means of the voltage curve, only the "differential power" $P_{Diff} = (U_1 - U_2) \cdot I$ need be processed in the DC converter. This represents a crucial advantage compared with state-of-the-art circuits, in which a battery's total voltage must always be converted. The throttle in the invention can therefore be of far smaller dimensions, since only the differential voltage $U_1$-$U_2$ occurs there as a ripple voltage. A circuit according to the invention may therefore be small, light and compact in design, which means that the dimensions are essentially determined only by cable connections.

Two operating modes are possible with the circuit according to the invention:

- Both switches $S_1$, $S_2$ are switched through. This mode is characterised by the expression "overlapping in time", which has already been used above. Only ohmic losses occur in this case.

- $S_1$, $S_2$ synchronise alternately at a given frequency, e.g. a frequency between 50 kHz ...150 kHz. In this case, the pulse width modulation or frequency ratio determines the current division $I_1/I_2$ or the ratio of the individual currents $I_1$ and $I_2$ to the total current $I_A$.

It should be noted in this case that the switches must be able to interrupt the current flow in both directions and that the voltage across the switches must not be allowed to exceed the permitted inverse voltage (e.g. rated at 10-20% of the battery's rated voltage). In case of emergency, the switches must be connected through or the battery disconnected by means of the contactors.

In the synopsis with Fig. 4, the proportionate contributions of the individual voltages and currents to the total voltage and total current are joined together. This produces the following relationship, as is known from the customary step-down converters:

The voltage $U_A$ is the total of the two battery voltages $U_1$ and $U_2$ weighted with the relative voltage application duration in each case (pulse width or pulse-duty factor); where

$$T = T_1 + T_2, \quad U_A = \frac{T_1 \cdot U_1 + T_2 \cdot U_2}{T}$$

The current $I_A$ is divided proportionately between the two batteries in relation to the voltage application times in each case:

$$I_A = \frac{T_1 \cdot I_1 + T_2 \cdot I_2}{T} \qquad I_1 = \frac{T_1}{T} \cdot I_A \qquad I_2 = \frac{T_2}{T} \cdot I_A$$

Consequently, the current distribution between the batteries may be selected at random by choosing the voltage application times $T_1$ and $T_2$.

The circuit's optimum frequency ratio is preferably regulated by the fact that the controller receives feedback on the current state of charge of the individual batteries. This may result, for example, from the voltage and/or current from the individual batteries being measured continuously or at given intervals in time and the corresponding measurement passed on to the controller.

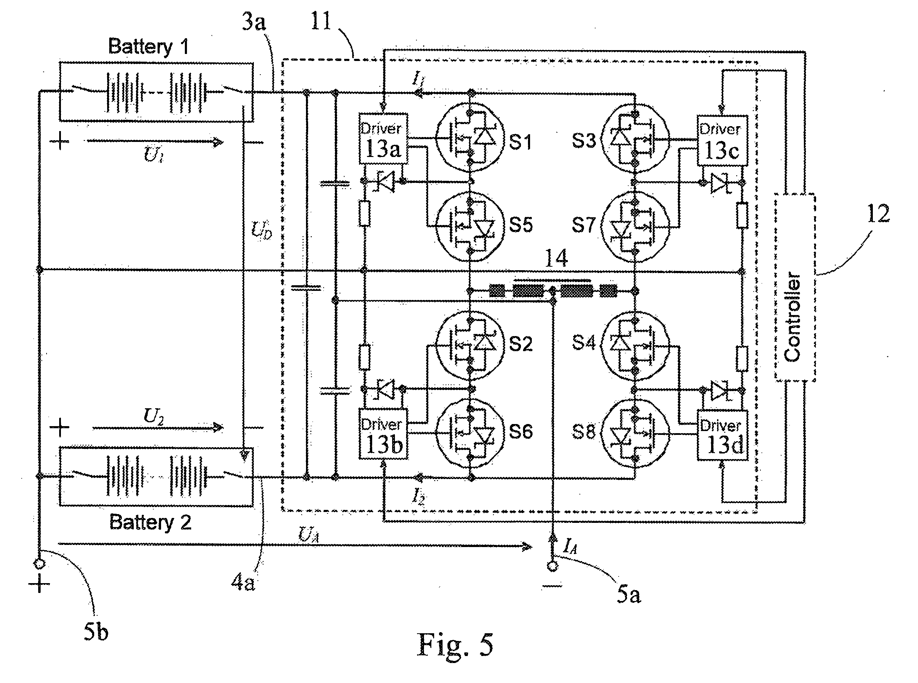

Fig. 5 shows, for example, a specific embodiment of the invention with a transformer-connected double throttle

14 and MOSFETs $S_1$, S2, S3, S4, S5, S6, S7, S8 as switches, wherein two MOSFETs in each case together form a bipolar switch. Controller 12 is also illustrated for the DC converter 11, which is connected to the drivers 13a, 13b, 13c, 13d via control lines. The drivers operate the switches assigned to them according to the control commands. Controller 12 and driver 13 create a pulse width modulation (PWM) device, through which the voltage existing between the terminals 3a, 4a at the accumulator end or a voltage diverted from this is (periodically) modulated. The differential voltage of the two batteries $U_1$-$U_2$ is designated $U_D$.

The advantages of this circuit are that a smaller throttle can be used and that a continuous, ripple-free current flow can be achieved in each battery at a 50% duty cycle, in other words, in the case of $T_1 = T_2 = T/2$. The connection to the battery's positive terminal is only used in this case to supply the drivers, for example (power requirement low watts) and has no function in the main circuit.

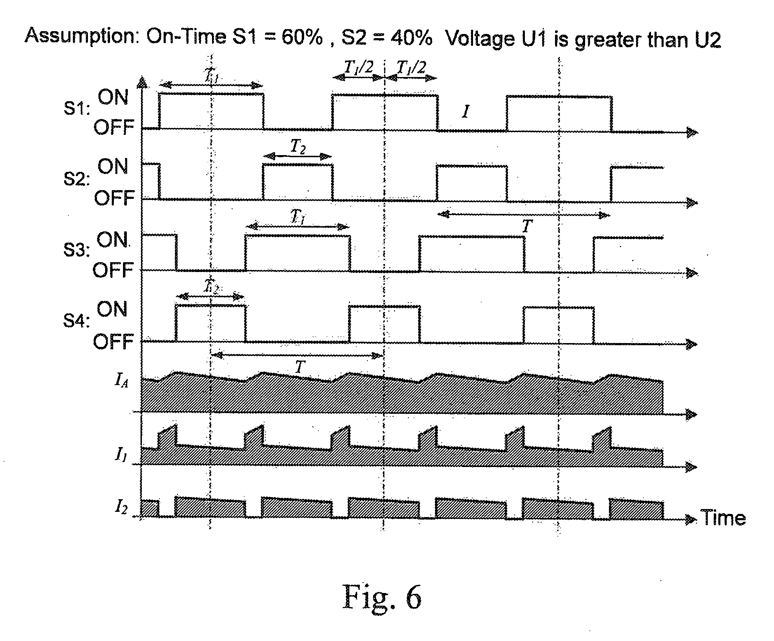

Fig. 6 depicts the temporal correlation of the switching states and currents in relation to the circuit from Fig. 5. It is assumed in this case that $U_1 > U_2$, i.e. the differential voltage $U_D$ is positive. The controller 12 then permanently switches through the MOSFETs S5 to S8 via the drivers 13a, 13b, 13c, 13d. The remaining MOSFETs S1 to S4 create two parallel half-bridges, which are each switched with a 180° phase-displaced, symmetrical pulse width modulation (PWM) in accordance with Fig. 6.

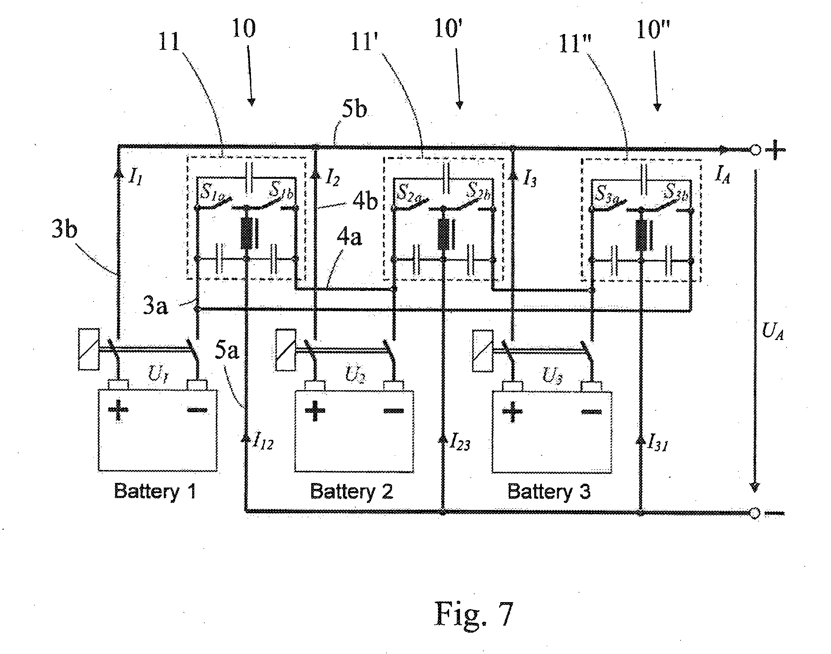

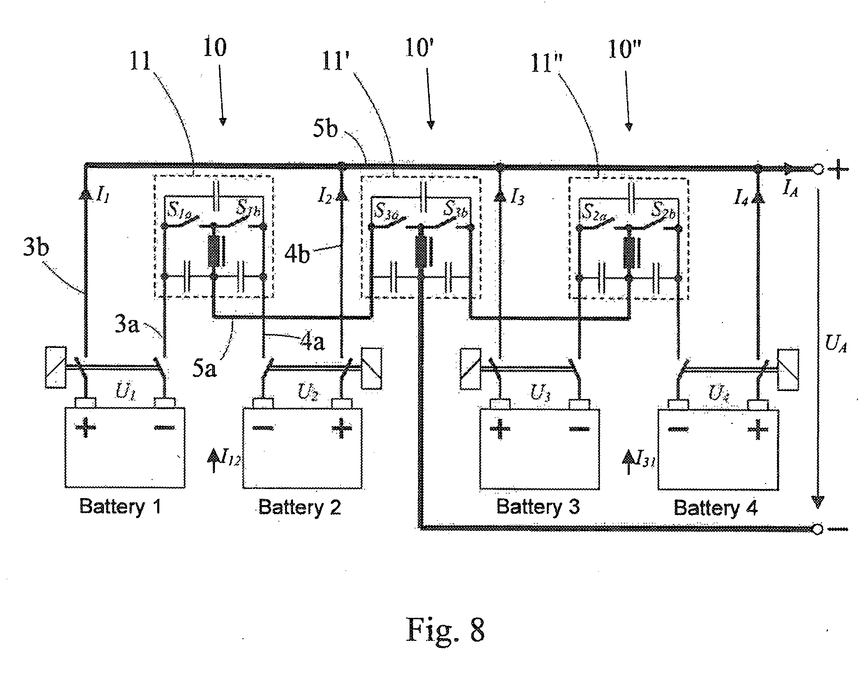

Figs. 7 and 8 show that the invention is not restricted to circuits with two batteries, but is actually open-ended. Fig. 7 shows, for example, an array of three batteries 1, 2, 3, wherein any number of batteries can be switched using the same process. For n batteries, n balancer circuits 10 or DC converters 11 are needed according to this circuit n. In this case, a terminal of a charge accumulator 1, 2, 3 is simultaneously connected to two adjacent DC converters 11. In this case, each of the DC converters shown with a dotted outline may be designed, for example, according to the part with the dotted outline in Fig. 3 or Fig. 5. Starting with the required currents $I_1$, $I_2$, $I_3$, currents $I_{12}$, $I_{23}$ and $I_{31}$ result as follows:

$$I_{12} = T_1 \cdot I_1 + \left(T - T_1\right) \cdot I_2$$

$$I_{23} = T_2 \cdot I_2 + \left(T - T_2\right) \cdot I_3$$

$$I_{31} = T_3 \cdot I_3 + \left(T - T_3\right) \cdot I_1$$

When both switches are in a stationary, switched-through state, this is a special case of operation overlapping in time. The general (synchronised) overlapping operation is not of course preferred in all configurations. Particularly in the case of systems with more than one throttle (e.g. Fig. 7), this may, however, quite possibly be a preferred variant, e.g. if the total voltage application times of the switches connected to a battery terminal (e.g. S1a and S3b in Fig. 7) is greater than 100%.

Fig. 8 shows a possible design for the 2nd batteries. If the number n of batteries is an integral exponent of 2 (in other words, 2, 4, 8, 16,..a power of 2), n-1 string balancer circuits 10 are sufficient. Based on the example of a total of four batteries 1, 2, 3, 4, this shows how a string balancer is connected either to the negative terminals of 2 batteries or to the outputs of 2 string balancers in each case.

The embodiment shown in Fig. 8 comprises three circuits according to the invention 10, 10', 10" (only the first of which is shown in full), wherein the connection terminal 5a at the load or charging end of the circuit 10 is not connected straight to the HV BUS, but to the connection terminal at the charge accumulator end of an adjacent circuit 10'. The same applies to the circuit 10".

The definition of "charge accumulator-end connection terminals" on the one hand and "load- or charging-end connection terminals" on the other hand is always arrived at from the point of view of the electrical circuit 10 in each case. In other words, those connection terminals that are closer to the charge accumulators or are assigned to these are referred to as being at the charge accumulator end. Those connection terminals that are closer to the load and/or the charging device or HV BUS are referred to as being at the load or charging end. Hence, it may quite easily be, as in Fig. 8, that a load- or charging end connection terminal 5a of a circuit 10 is not connected straight to the HV BUS, but via an intermediate circuit 10'.

As already mentioned earlier, the circuit according to the invention may also be an integral part of a charging device. The charge voltage is applied to the circuit's connection terminals at the charge end, e.g. via an AC/DC converter, and the charge current divided proportionately via the DC converter according to the pulse width modulation applied or the frequency ratio of the switches operated alternately. The current state of charge of the individual batteries is taken into account when controlling the switches, so that the frequency ratio can change in favour of a battery during the course of the charging process.

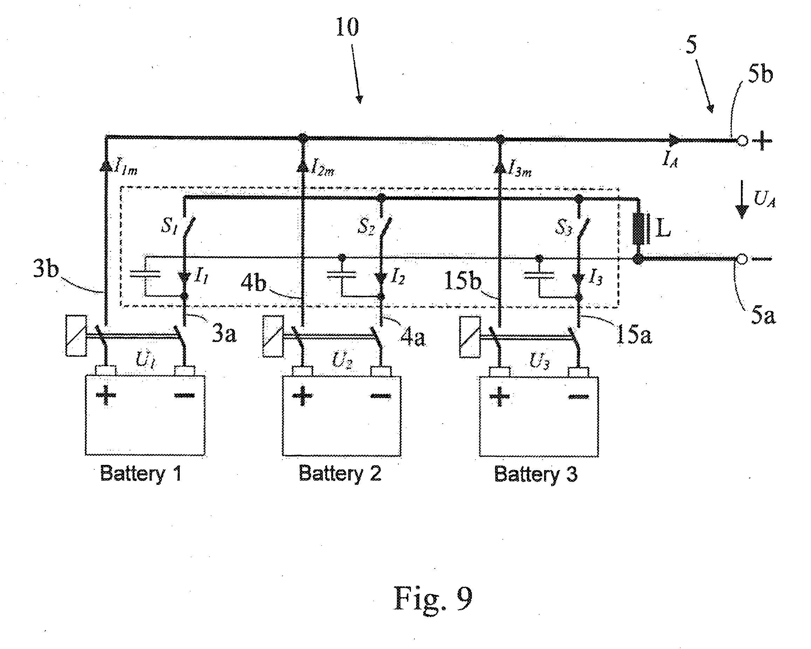

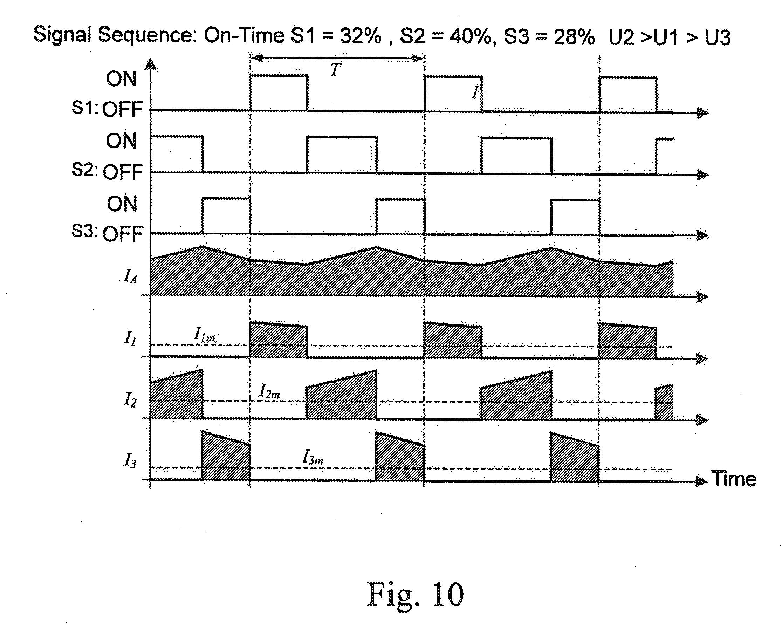

Fig. 9 shows yet another embodiment of a circuit 10 according to the invention. In this case, there is an alternating switch between three accumulators 1, 2, 3. In other words, the DC converter comprises three switches S1, S2, S3 as active elements, which alternately applies one of the three connection terminals 3a, 4a, 15a at the accumulator end via a common passive element L (throttle) to the matching connection terminal 5a at the load or charging end. In a similar way, more than three connection terminals and switches are also conceivable. Fig. 10 shows the corresponding switch states as a function of time.

Although the "modular approach", as depicted in Figs. 7 and 8, is impeded by this measure, as two switches in each case must always be bridged by a capacitor located as close as possible, with the variant in Fig. 9, only one throttle L is sufficient, which represents an advantage when there are only three batteries.

The three batteries illustrated in Fig. 9 are switched through in immediate succession, so that three voltage plateaux occur. In this case the differential voltage of two batteries is not processed, but at most the differential voltage between the battery with the highest voltage and the one with the lowest voltage.

In order to extend the corresponding wording to all embodiments shown, it should now be considered or established that in the circuit according to the invention it is essentially the greatest differential voltage applied between matching connection terminals at the charge accumulator end or a voltage derived from this differential voltage that is converted at best.

### Reference list

| | |
|---|---|
| 1, 2, 3, 4 | Charge accumulator |
| 3a, 3b | Connection terminals at the charge accumulator end |
| 4a, 4b | Connection terminals at the charge accumulator end |
| 5 | High voltage BUS |
| 5a, 4b | Connection terminals at the load or charging end |
| 6 | Drive converter |
| 7 | Load |
| 8 | Auxiliary units |
| 10, 10', 10" | Electrical circuits |
| 11 | DC converter |
| 12 | Controller |
| 13a, 13b, 13c, 13d | Driver |
| 14 | Transformer-connected double throttle |
| 15a, 15b | Connection terminals at the charge accumulator end |
| $I_1, I_2, I_3, I_4$ | Charge accumulator currents |
| $I_L$ | Load current |
| L | Passive DC converter element |
| S1, S2, S3, S4, S5, S6, S7, S8 | Switches |
| $U_1, U_2, U_3, U_4$ | Charge accumulator voltages |
| $U_A$ | Smoothed output voltage |
| $U_D$ | Differential voltage |

### Claims

1. An electrical circuit (10) for a parallel array of at least two charge accumulators (1, 2), particularly batteries, storage batteries, for the voltage supply of a load (7) and/or for the electrical charging of the charge accumulator (1, 2), with connection terminals (3a, 3b, 4a, 4b) at the charge accumulator end and connection terminals (5a, 5b) at the load or charging ends and with at least one DC converter (11), **characterised in that** the DC converter (11) connects one of the connection terminals (5a) at the load or charge end to the corresponding matching connection terminals (3a, 4a) at the charge accumulator end, which are each assigned to matching terminals of the charge accumulators (1, 2) or combined charge accumulators, wherein corresponding terminals (3a, 4a) at the charge accumulator end can be controllably connected by switches (S1, S2; S1 - S8) as active elements of the DC converter (11) alternately or overlapping in time via at least one common passive element (L) of the DC converter (11) with the corresponding matching connection terminal (5a) at the load or charging end.

2. The electrical circuit according to claim 1, **characterised in that** the switches (S1, S2, S3; S1 - S8) are MOSFETs, preferably low-voltage MOSFETs.

3. The electrical circuit according to one of the claims 1 to 2, **characterised in that** the switches (S1, S2, S3; S1 - S8) can be operated at a frequency of between roughly 20 kHz and 500 kHz, preferably between roughly 50 kHz and 150 kHz.

4. The electrical circuit according to one of the claims 1 to 3, **characterised in that** the at least one passive element is a throttle (L).

5. The electrical circuit according to claim 4, **characterised in that** the throttle (L) is designed as a transformer-connected double throttle.

6. The electrical circuit according to any of the preceding claims, further comprising a first capacitor electrically connected between a first connection terminal (3a) at the charge accumulator end and the connection terminal (5a) at the load or charge end, in parallel to said common passive element (L).

7. The electrical circuit according to any of the preceding claims, further comprising a second capacitor electrically connected between a second connection terminal (4a) at the charge accumulator end and the connection terminal (5a) at the load or charge end, in parallel to said common passive element (L).

8. The electrical circuit according to any of the preceding claims, further comprising a third capacitor electrically connected between the first connection terminal (3a) and the second connection terminal (4a) at the charge accumulator end.

9. A voltage supply device with at least two parallel-connected charge accumulators (1, 2), particularly batteries, storage batteries, for the voltage supply of a load (7), **characterised in that** it comprises at least one electrical circuit (10; 10', 10", 10''') according to one of the claims 1 to 8.

10. The voltage supply device according to claim 9, **characterised in that** it has at least two circuits (10, 10', 10"), wherein a connection terminal (5a) at the load or charge end of a circuit (10) is connected to the connection terminal at the charge accumulator end of another circuit (10'). (Fig. 8)

11. A charging device for a parallel array of at least two charge accumulators (1, 2), particularly batteries, storage batteries, etc., for the electrical charging of the charge accumulators (1, 2), **characterised in that** it comprises at least one electrical circuit (10; 10', 10", 10''') according to one of the claims 1 to 8.

12. The charging device according to claim 11, **characterised in that** it has at least two circuits (10, 10', 10"), wherein a connection terminal (5a) at the load or charge end of a circuit (10) is connected to the connection terminal at the charge accumulator end of another circuit (10'). (Fig. 8)

13. An electrically operated vehicle with at least one electrical circuit (10; 10', 10", 10''') according to one of the claims 1 to 8.

14. A method of balancing the states of charge of at least two parallel-connected charge accumulators (1, 2), particularly batteries, storage batteries, etc., during the voltage supply of a load (7) by the charge accumulator (1, 2) or during the charging of the charge accumulator (1, 2), wherein at least one DC converter (11) is used, **characterised in that** with switches (S1, S2) as active elements of the DC converter (11) the matching terminals of the charge accumulators (1, 2) are applied alternately with the combined matching connection terminal (5a) of the charge accumulator chain formed from the at least two charge accumulators (1, 2), such that the differential voltage applied between matching terminals of the charge accumulators (1, 2) or a voltage derived from this differential voltage is converted in the DC converter (11).

**Patentansprüche**

1. Schaltung (10) für eine parallele Anordnung von mindestens zwei Ladeakkumulatoren (1, 2), insbesondere Batterien, Akkumulatorenbatterien, zur Spannungsversorgung einer Last (7) und/oder zum elektrischen Laden des Ladeakkumulators (1, 2), mit Verbindungsanschlüssen (3a, 3b, 4a, 4b) auf der Ladeakkumulatorseite und Verbindungsanschlüssen (5a, 5b) auf der Last- oder Ladeseite und mit mindestens einem Gleichspannungswandler (11), **dadurch gekennzeichnet, dass** der Gleichspannungswandler (11) einen der Verbindungsanschlüsse (5a) auf der Last- oder Ladeseite mit den entsprechenden passenden Verbindungsanschlüssen (3a, 4a) auf der Ladeakkumulatorseite verbindet, die jeweils zu passenden Anschlüssen der Ladeakkumulatoren (1, 2) oder kombinierten Ladeakkumulatoren zugewiesen sind, wobei entsprechende Anschlüsse (3a, 4a) auf der Ladeakkumulatorseite steuerbar durch Schalter (S1, S2; S1 - S8) als aktive Elemente des Gleichspannungswandlers (11) abwechselnd oder überlappend in der Zeit über mindestens ein gemeinsames passives Element (L) des Gleichspannungswandlers (11) mit dem entsprechenden passenden Verbindungsanschluss (5a) auf der Last- oder Ladeseite verbunden werden können.

2. Schaltung nach Anspruch 1, **dadurch gekennzeichnet, dass** die Schalter (S1, S2, S3; S1 - S8) MOSFETs und vorzugsweise Niederspannungs-MOSFETs sind.

3. Schaltung nach einem der Ansprüche 1 bis 2, **dadurch gekennzeichnet, dass** die Schalter (S1, S2, S3; S1 - S8) bei einer Frequenz zwischen ungefähr 20 kHz und 500 kHz, vorzugsweise zwischen ungefähr 50 kHz und 150 kHz, betrieben werden können.

4. Schaltung nach einem der Ansprüche 1 bis 3, **dadurch gekennzeichnet, dass** das mindestens eine passive Element eine Drossel (L) ist.

5. Schaltung nach Anspruch 4, **dadurch gekennzeichnet, dass** die Drossel (L) als eine mit einem Transformator verbundene Doppeldrossel konzipiert ist.

6. Schaltung nach einem der vorstehenden Ansprüche, weiter umfassend einen ersten Kondensator, der zwischen einem ersten Verbindungsanschluss (3a) auf der Ladeakkumulatorseite und dem Verbindungsanschluss (5a) auf der Last- oder Ladeseite parallel zu dem gemeinsamen passiven Element (L) elektrisch verbunden ist.

7. Schaltung nach einem der vorstehenden Ansprüche, weiter umfassend einen zweiten Kondensator, der zwischen einem zweiten Verbindungsanschluss (4a) auf der Ladeakkumulatorseite und dem Verbindungsanschluss (5a) auf der Last- oder Ladeseite parallel zu dem gemeinsamen passiven Element (L) elektrisch verbunden ist.

8. Schaltung nach einem der vorstehenden Ansprüche, weiter umfassend einen dritten Kondensator, der zwischen dem ersten Verbindungsanschluss (3a) und dem zweiten Verbindungsanschluss (4a) auf der Ladeakkumulatorseite elektrisch verbunden ist.

9. Spannungsversorgungsgerät mit mindestens zwei parallel geschalteten Ladeakkumulatoren (1, 2), insbesondere Batterien, Akkumulatorenbatterien zur Spannungsversorgung einer Last (7), **dadurch gekennzeichnet, dass** es mindestens eine Schaltung (10; 10', 10'', 10''') nach einem der Ansprüche 1 bis 8 umfasst.

10. Spannungsversorgungsgerät nach Anspruch 9, **dadurch gekennzeichnet, dass** es mindestens zwei Schaltungen (10, 10', 10'') aufweist, wobei ein Verbindungsanschluss (5a) auf der Last- oder Ladeseite einer Schaltung (10) mit dem Verbindungsanschluss auf der Ladeakkumulatorseite einer anderen Schaltung (10') verbunden ist (FIG. 8) .

11. Ladegerät für eine parallele Anordnung von mindestens zwei Ladeakkumulatoren (1, 2), insbesondere Batterien, Akkumulatorenbatterien usw., zum elektrischen Laden der Ladeakkumulatoren (1, 2), **dadurch gekennzeichnet, dass** es mindestens eine Schaltung (10; 10', 10", 10''') nach einem der Ansprüche 1 bis 8 umfasst.

12. Ladegerät nach Anspruch 11, **dadurch gekennzeichnet, dass** es mindestens zwei Schaltungen (10, 10', 10'') aufweist, wobei ein Verbindungsanschluss (5a) auf der Last- oder Ladeseite einer Schaltung (10) mit dem Verbindungsanschluss auf der Ladeakkumulatorseite einer anderen Schaltung (10') verbunden ist (FIG. 8) .

13. Elektrisch betriebenes Fahrzeug mit mindestens einer Schaltung (10; 10', 10'', 10''') nach einem der Ansprüche 1 bis 8.

14. Verfahren zum Ausgleichen der Ladezustände von mindestens zwei parallel geschalteten Ladeakkumulatoren (1, 2), insbesondere Batterien, Akkumulatorenbatterien usw., während der Spannungsversorgung einer Last (7) durch den Ladeakkumulator (1, 2) oder während des Ladens des Ladeakkumulators (1, 2), wobei mindestens ein Gleichspannungswandler (11) verwendet wird, **dadurch gekennzeichnet, dass** mit den Schaltern (S1, S2) als aktive Elemente des Gleichspannungswandlers (11) die passenden Anschlüsse der Ladeakkumulatoren (1, 2) abwechselnd mit dem kombinierten passenden Verbindungsanschluss (5a) der Ladeakkumulatorkette, die aus den mindestens zwei Ladeakkumulatoren (1, 2) gebildet ist, angelegt wird, sodass die Differenzspannung zwischen passenden Anschlüssen der Ladeakkumulatoren (1, 2) oder eine Spannung, die von dieser Differenzspannung abgeleitet ist, im Gleichspannungswandler (11) umgewandelt wird.

## Revendications

1. Circuit électrique (10) pour un réseau parallèle d'au moins deux accumulateurs de charge (1, 2), en particulier des batteries, des batteries de stockage, pour l'alimentation de tension d'une charge (7) et/ou pour le chargement électrique de l'accumulateur de charge (1, 2), avec des bornes de connexion (3a, 3b, 4a, 4b) à l'extrémité d'accumulateur de charge et des bornes de connexion (5a, 5b) aux extrémités de charge ou de chargement et avec au moins un convertisseur CC (11), **caractérisé en ce que** le convertisseur CC (11) relie l'une des bornes de connexion (5a) à l'extrémité de charge ou de chargement aux bornes de connexion correspondantes (3a, 4a) à l'extrémité d'accumulateur de charge, qui sont chacune affectées à des bornes correspondantes des accumulateurs de charge (1, 2) ou à des accumulateurs de charge combinés, dans lequel des bornes correspondantes (3a, 4a) à l'extrémité d'accumulateur de charge peuvent être reliées, de manière à pouvoir être commandées, par des commutateurs (S1, S2 ; S1 - S8) en tant qu'éléments actifs du convertisseur CC (11) en alternance ou en chevauchement dans le temps par l'intermédiaire d'au moins un élément passif commun (L) du convertisseur CC (11) avec la borne de connexion correspondante (5a) à l'extrémité de charge ou de chargement.

2. Circuit électrique selon la revendication 1, **caractérisé en ce que** les commutateurs (S1, S2, S3 ; S1 - S8) sont des MOSFET, de préférence des MOSFET à basse tension.

3. Circuit électrique selon l'une quelconque des revendications 1 et 2, **caractérisé en ce que** les commutateurs (S1, S2, S3 ; S1 - S8) peuvent être actionnés à une fréquence entre environ 20 kHz et environ 500 kHz, de préférence entre environ 50 kHz et environ 150 kHz.

4. Circuit électrique selon l'une quelconque des revendications 1 à 3, **caractérisé en ce que** l'au moins un élément passif est un étrangleur (L).

5. Circuit électrique selon la revendication 4, **caractérisé en ce que** l'étrangleur (L) est conçu en tant qu'étrangleur double relié à un transformateur.

6. Circuit électrique selon l'une quelconque des revendications précédentes, comprenant en outre un premier condensateur relié électriquement entre une première borne de connexion (3a) à l'extrémité d'accumulateur de charge et la borne de connexion (5a) à l'extrémité de charge ou de chargement en parallèle au dit élément passif commun (L).

7. Circuit électrique selon l'une quelconque des revendications précédentes, comprenant en outre un deuxième condensateur relié électriquement entre une deuxième borne de connexion (4a) à l'extrémité d'accumulateur de charge et la borne de connexion (5a) à l'extrémité de charge ou de chargement, en parallèle au dit élément passif commun (L).

8. Circuit électrique selon l'une quelconque des revendications précédentes, comprenant en outre un troisième condensateur relié électriquement entre la première borne de connexion (3a) et la deuxième borne de connexion (4a) à l'extrémité d'accumulateur de charge.

9. Dispositif d'alimentation de tension avec au moins deux accumulateurs de charge reliés en parallèle (1, 2), en particulier des batteries, des batteries de stockage, pour l'alimentation de tension d'une charge (7), **caractérisé en ce qu'**il comprend au moins un circuit électrique (10 ; 10', 10" , 10''') selon l'une des revendications 1 à 8.

10. Dispositif d'alimentation de tension selon la revendication 9, **caractérisé en ce qu'**il comporte au moins deux circuits (10, 10', 10"), dans lequel une borne de connexion (5a) à l'extrémité de charge ou de chargement d'un circuit (10) est reliée à la borne de connexion à l'extrémité d'accumulateur de charge d'un autre circuit (10'). (Fig. 8)

11. Dispositif de chargement pour un réseau parallèle d'au moins deux accumulateurs de charge (1, 2), en particulier des batteries, des batteries de stockage, etc., pour le chargement électrique des accumulateurs de charge (1, 2), **caractérisé en ce qu'**il comprend au moins un circuit électrique (10 ; 10', 10" , 10''') selon l'une des revendications 1 à 8.

**12.** Dispositif de chargement selon la revendication 11, **caractérisé en ce qu'**il comporte au moins deux circuits (10, 10', 10''), dans lequel une borne de connexion (5a) à l'extrémité de charge ou de chargement d'un circuit (10) est reliée à la borne de connexion à l'extrémité d'accumulateur de charge d'un autre circuit (10'). (Fig. 8)

**13.** Véhicule à fonctionnement électrique avec au moins un circuit électrique (10 ; 10', 10" , 10''') selon l'une des revendications 1 à 8.

**14.** Procédé d'équilibrage des états de charge d'au moins deux accumulateurs de charge reliés en parallèle (1, 2), en particulier des batteries, des batteries de stockage, etc., pendant l'alimentation de tension d'une charge (7) par l'accumulateur de charge (1, 2) ou pendant le chargement de l'accumulateur de charge (1, 2), dans lequel au moins un convertisseur CC (11) est utilisé, **caractérisé en ce que**, avec des commutateurs (S1, S2) en tant qu'éléments actifs du convertisseur CC (11), les bornes correspondantes des accumulateurs de charge (1, 2) sont appliquées en alternance avec la borne de connexion correspondante combinée (5a) de la chaîne d'accumulateurs de charge constituée des au moins deux accumulateurs de charge (1, 2), de sorte que la tension différentielle appliquée entre des bornes correspondantes des accumulateurs de charge (1, 2) ou une tension dérivée de cette tension différentielle soit convertie dans le convertisseur CC (11).

prior art

Fig. 1

prior art

Fig. 2

Fig. 3

Fig. 4

EP 2 548 259 B1

Fig. 5

EP 2 548 259 B1

Fig. 6

Fig. 7

EP 2 548 259 B1

Fig. 8

Fig. 9

EP 2 548 259 B1

Signal Sequence: On-Time S1 = 32% , S2 = 40%, S3 = 28%  U2 >U1 > U3

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020171397 A
- JP 10225107 A
- US 6353304 B1
- AT 505169 B1
- US 6774606 B1
- US 5479083 A
- US 5631534 A
- US 7049791 B2
- US 20090278489 A
- US 6150795 A